# EUROPÄISCHE PATENTSCHRIFT

(11) **EP 1 769 119 B1**
(45) Veröffentlichungstag und Bekanntmachung des Hinweises auf die Patenterteilung: **26.11.2008**
(21) Anmeldenummer: 05762986.7
(22) Anmeldetag: 18.07.2005
(51) Int. Cl.: D21G 1/02

(54) **BIEGEAUSGLEICHSWALZE**
DEFLECTION COMPENSATING ROLL
ROULEAU DE COMPENSATION DE FLEXION

(30) Priorität: 19.07.2004 DE 102004034830
(43) Veröffentlichungstag der Anmeldung: 04.04.2007
(73) Patentinhaber: Voith Patent GmbH, 89522 Heidenheim (DE)
(72) Erfinder: VAN HAAG, Rolf, 47647 Kerken (DE)
(86) Internationale Anmeldenummer: PCT/EP2005/053434
(87) Internationale Veröffentlichungsnummer: WO 2006/008283

(56) Entgegenhaltungen:
- EP-A- 0 364 753
- US-B1- 6 471 018

## Beschreibung

Die Erfindung betrifft eine Biegeausgleichswalze mit einem umlaufenden Walzenmantel, einem den Walzenmantel axial durchsetzenden drehfesten Joch und wenigstens einer zwischen dem Joch und dem Walzenmantel angeordneten hydrostatischen Stützquelle, die auf ihrer dem Walzenmantel zugewandten Seite wenigstens eine Öltasche aufweist, die über wenigstens eine erste Drosselstelle mit dem Druckraum der Stützquelle in Verbindung steht.

In solchen Biegeausgleichswalzen kommen Stützquellen zum Einsatz, die durch eine Versorgungsleitung mit Öldruck beaufschlagt werden. Dieser Öldruck presst die Stützquelle gegen den rotierenden Walzenmantel. Da die Kolbenfläche der Stützquelle kleiner ist als die zum Walzenmantel weisende Taschenfläche, stellt sich ein geringerer Taschenöldruck ein. Die Druckdifferenz zwischen Kolbendruck und Taschendruck bestimmt den Volumenstrom, der über die Kapillaren fließt, die zwischen die Taschenfläche und die Kolbenfläche geschaltet sind. Somit stellt sich in Abhängigkeit vom Kolbendruck der Volumenstrom an einer Stützquelle ein.

Zur individuellen Profilkorrektur der durch den Walzenspalt laufenden Warenbahn werden die Stützquellen einzeln mit einem Öldruck beaufschlagt. Die Höhe der Öldrücke wird über eine Online-Profildickenmessung der Warenbahn geregelt. In Abhängigkeit von den notwendigen Profilkorrekturen kann es nun aber zu großen Öldruckdifferenzen an den Stützquellen kommen (z.B. 3,5 bis 90 bar von Stützquelle zu Stützquelle). Dies führt, wie bereits erwähnt, zu Volumenstromdifferenzen an den Stützquellen. Zwischen dem rotierenden Walzenmantel und den Stützquellen entsteht durch die Ölscherung in Abhängigkeit von der Mantelgeschwindigkeit und der Ölspalthöhe, die wieder vom Volumenstrom, der Öltemperatur und dem Taschendruck abhängig ist, Reibung. Durch die großen Druckunterschiede entsteht somit von einer zur anderen Stützquelle eine unterschiedlich hohe Reibleistung, die sich in Temperaturdifferenzen am Walzenmantel auswirkt. Diese Temperaturdifferenzen haben wiederum eine Auswirkung auf die Form des Walzenmantels und somit einen Rückkopplungseffekt auf das erzeugende Streckenlastprofil der Biegeausgleichswalze.

Da sich bei einer Druckentlastung an einer Stützquelle der geringere Volumenstrom einstellt, ergibt sich an dieser Stützquelle trotz betragsmäßig geringerer Reibleistung als bei hohen Drücken eine höhere Temperatur. Eine höhere Temperatur führt nun aber zu einer Ausdehnung des Walzenmantels, die sich in einer Streckenlasterhöhung im Walzenspalt auswirkt. Die betreffende Temperaturentwicklung äußerst sich also gegenläufig zur gewünschten Druckentlastung und ist somit unerwünscht. In Einzelfällen kann sie sogar zu einer Instabilität des Regelverhaltens führen.

Bisher war es allgemein üblich, die Temperaturentwicklung an den Stützquellen durch einen separaten Kühlstrom zu begrenzen, der in den Innenraum der Walze geleitet wird. Hierzu wurde ein Volumenstrom geringer Temperatur, dessen Menge über die Rücklauftemperatur der Walze geregelt wird, über Düsen im Walzeninnenraum verteilt. Durch diese Verteilung wird jeder Stützquelle die gleiche Menge Kühlöl zugeführt. Durch die oben beschriebenen Volumenstromdifferenzen stellen sich trotz der zugeführten Kühlölmenge unterschiedliche Temperaturen an den Stützquellen ein. Die sich einstellende Mischtemperatur im Walzeninneren entspricht in etwa der örtlichen Rücklauftemperatur.

Die sich einstellenden örtlichen Rücklauftemperaturen zeigen mit kleiner werdenden Kühlölströmen eine steigende Temperaturdifferenz zwischen einer hochbelasteten und niedrigbelasteten Stützquelle. Diese Temperaturdifferenz wird sich maßgeblich auf die Form des rotierenden Walzenmantels auswirken.

Aus der DE 101 36 270 A ist bereits eine Durchbiegungseinstellwalze bekannt, bei der die mittels einer Temperaturbeeinflussungseinrichtung lokal einer jeweiligen Walzenzone zugeführte Fluidmenge in Abhängigkeit vom Kolbendruck des betreffenden Stützelements bzw. der betreffenden Stützelementgruppe variierbar ist.

Aus der EP 0364 753 A ist eine Biegeausgleichswalze mit einem umlaufenden Walzenmantel, einem den Walzenmantel axial durchsetzenden drehfesten Joch und wenigstens einer zwischen dem Joch und dem Walzenmantel angeordneten hydrostatischen Stützquelle, die auf ihrer dem Walzenmantel zugewandten Seite wenigstens eine Öltasche aufweist, die über zwei Drosselstellen mit Zuleitungen zur Stützquelle in Verbindung steht, bekannt.

Der Erfindung liegt die Aufgabe zugrunde, eine verbesserte Biegeausgleichswalze der eingangs genannten Art zu schaffen, bei der die zuvor genannten Nachteile beseitigt sind.

Erfindungsgemäß wird diese Aufgabe gelöst durch eine Biegeausgleichswalze mit einem umlaufenden Walzenmantel, einem den Walzenmantel axial durchsetzenden drehfesten Joch und wenigstens einer zwischen dem Joch und dem Walzenmantel angeordneten hydrostatischen Stützquelle, die auf ihrer dem Walzenmantel zugewandten Seite wenigstens eine Öltasche aufweist, die über wenigstens eine erste Drosselstelle mit dem Druckraum der Stützquelle in Verbindung steht, wobei die Stützquelle zumindest teilweise mit einem elektrorheologischen Fluid (ERF) und/oder Ferrofluid betrieben ist, dessen Viskosität über ein elektrisches bzw. magnetisches Feld variierbar ist, und wobei die Öltasche über wenigstens eine zur ersten Drosselstelle parallele zweite Drosselstelle mit dem Druckraum in Verbindung steht und der durch die zweite Drosselstelle fließende zusätzliche Volumenstrom über ein die Viskosität des elektrorheologischen Fluids (ERF) bzw. Ferrofluids beeinflussendes Feld variierbar ist.

Aufgrund dieser Ausbildung kann also der durch die zweite Drosselstelle fließende zusätzliche Volumenstrom für eine gewünschte Temperierung entsprechend variiert werden. Unerwünschte Temperatureinflüsse können so unterdrückt bzw. kompensiert werden. Dabei wird der Umstand ausgenutzt, dass sich die Fließeigenschaft bzw. Viskosität eines elektrorheologischen Fluids oder Ferrofluids unter dem Einfluss eines elektrischen bzw. magnetischen Feldes ändert, d.h. beispielsweise ein Volumenstrom durch Veränderung des betreffenden Feldes variiert werden kann.

Unter dem Einfluss des betreffenden Feldes können die Fließeigenschaften der elektrorheologischen Fluide (ERF) bzw. Ferrofluide stufenlos und reversibel verändert werden. Bei den heute verfügbaren ER-Flüssigkeiten handelt es sich insbesondere um Siliconöl, in dem Polyurethanpartikel dispergiert sind. Mit zunehmender elektrischer Spannung bzw. Feldstärke nimmt die scheinbare Viskosität der ERF im Feld zu und der Volumenstrom ab. Die Eigenschaften eines elektrorheologischen Fluids (ERF) bzw. Ferrofluids erlauben also beispielsweise eine relativ einfache, schnelle und stets ausfallsichere Volumenstromregelung. Darüber hinaus ist über eine entsprechende Variation der Viskosität des elektrorheologischen Fluids bzw. Ferrofluids insbesondere auch eine Stützquellen-Druckregelung denkbar. Zudem können gezielt bestimmte Dämpfungseigenschaften an der Stützquelle realisiert oder auch das Führungsverhalten des Walzenmantels gezielt beeinflusst werden.

Bevorzugt ist der durch die zweite Drosselstelle fließende zusätzliche Volumenstrom über das betreffende Feld in Abhängigkeit vom Druck im Druckraum variierbar.

Dabei ist der durch die zweite Drosselstelle fließende zusätzliche Volumenstrom über das betreffende Feld insbesondere so steuerbar und/oder regelbar, dass sich bei höheren Drücken im Druckraum ein geringerer oder kein zusätzlicher Volumenstrom und bei geringeren Drücken im Druckraum ein höherer zusätzlicher Volumenstrom ergibt. In dem Fall, dass bei höheren Drücken kein zusätzlicher Volumenstrom mehr fließt, wird die betreffende Stützquelle also wie eine herkömmliche Stützquelle betrieben. Demgegenüber fließt bei niedrigen Kolbendrücken ein zusätzlicher Volumenstrom über die Stützquelle, was eine Erhöhung des Ölspaltes mit sich bringt und damit zu einer Verringerung der Reibleistung führt.

Mit der geringeren Reibung und dem erhöhten Volumenstrom ergibt sich eine deutliche Reduzierung der sich einstellenden Öltemperatur im Rücklauf, wodurch die eingangs erwähnten negativen thermischen Effekte vermieden werden.

Die erfindungsgemäße Parallelschaltung aus einer festen Drosselstelle und einer elektrisch oder magnetisch steuerbaren Drosselstelle bringt überdies den Vorteil mit sich, dass bei eventuell auftretenden Fehlbeaufschlagungen der steuerbaren Drosselstelle es nicht zu einer Mischreibung zwischen den Stützquellen und dem rotierenden Walzenmantel kommen kann. Bei völlig verschlossenen elektrisch bzw. magnetisch steuerbaren Drosselstellen wird die Funktionsfähigkeit der Stützquellen unverändert erhalten.

Bei einer zweckmäßigen praktischen Ausführungsform der erfindungsgemäßen Biegeausgleichswalze, bei der die Stützquelle zumindest teilweise mit einem elektrorheologischen Fluid (ERF) betrieben wird, ist der durch die zweite Drosselstelle fließende zusätzliche Volumenstrom über ein elektrisches Feld variierbar. In diesem Fall kann in der zweiten Drosselstelle zur Erzeugung des elektrischen Feldes ein elektrischer Leiter, Kabel oder dergleichen angeordnet sein.

Vorteilhafterweise ist über ein die Viskosität des elektrorheologischen Fluids (ERF) bzw. Ferrofluids beeinflussendes Feld insbesondere auch der hydraulische Druck bzw. Druck im Druckraum variierbar. Dabei kann insbesondere eine Druckregelung vorgesehen sein.

Grundsätzlich kann über ein die Viskosität des elektrorheologischen Fluids (ERF) bzw. Ferrofluids beeinflussendes Feld insbesondere auch der durch die erste Drosselstelle fließende Volumenstrom variierbar sein. Auch hierbei kann insbesondere wieder eine Volumenstromregelung vorgesehen sein.

Es sind nun beispielsweise solche Ausführungen der Biegeausgleichswalze denkbar, bei denen die Stützquelle ausschließlich mit dem elektrorheologischen Fluid bzw. Ferrofluid betrieben ist.

Dabei können mehrere Stützquellen über eine gemeinsame Versorgungsleitung mit dem elektrorheologischen Fluid (ERF) bzw. Ferrofluid versorgt sein, in der der Systemdruck (z.B. Pumpendruck) gehalten wird.

Zwischen dem Druckraum einer jeweiligen Stützquelle und der gemeinsamen Versorgungsleitung ist bevorzugt jeweils eine Verbindungsleitung vorgesehen, in die eine Drosselstelle integriert ist, in der zur Erzeugung des Feldes beispielsweise ein elektrischer Leiter, Kabel oder dergleichen angeordnet ist.

Während die Viskosität eines jeweiligen elektrorheologischen Fluids (ERF) in der Regel über ein elektrisches Feld oder eine elektrische Spannung veränderbar ist, ist bei den ebenfalls einsetzbaren Ferrofluiden die Viskosität durch das Aufschalten eines entsprechenden Magnetfeldes veränderbar.

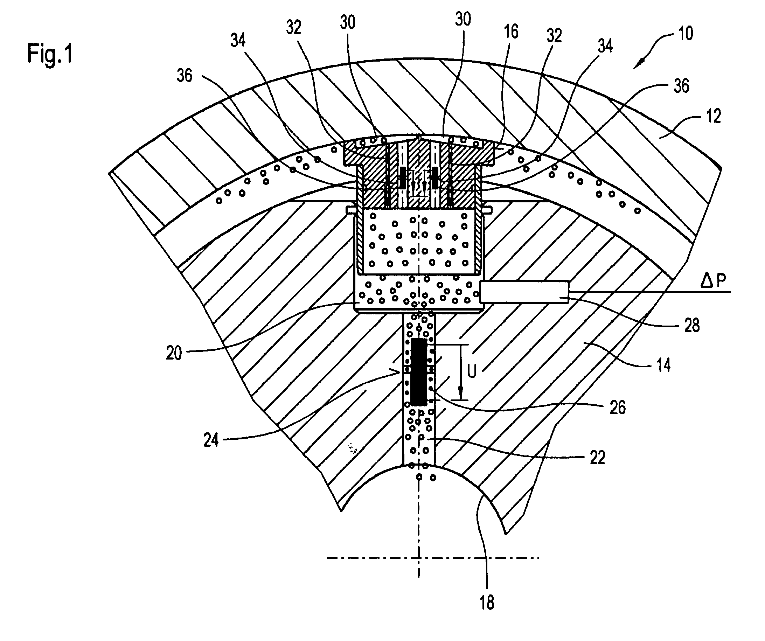

Die Erfindung wird im Folgenden anhand eines Ausführungsbeispiels unter Bezugnahme auf die Zeichnung näher erläutert.

In dieser Zeichnung zeigt die einzige Figur eine schematische, geschnittene Teildarstellung einer beispielhaften Ausführungsform einer Biegeausgleichswalze 10, die einen umlaufenden Walzenmantel 12 und ein den Walzenmantel 12 axial durchsetzendes drehfestes Joch 14 und wenigstens eine zwischen dem Joch 14 und dem Walzenmantel 12 angeordnete Stützquelle 16 umfasst.

Im vorliegenden Fall ist die Stützquelle 16 ausschließlich mit einem elektrorheologischen Fluid (ERF) bzw. Ferrofluid betrieben, dessen Viskosität über ein elektrisches bzw. magnetisches Feld variierbar ist.

Dabei kann über das die Viskosität des elektrorheologischen Fluids (ERF) bzw. Ferrofluids beeinflussende Feld u.a. der hydraulische Druck variiert werden, wobei insbesondere eine Druckregelung vorgesehen sein kann. Es sind mehrere, vorzugsweise sämtliche Stützquellen 16 über eine gemeinsame Versorgungsleitung 18 mit dem elektrorheologischen Fluid (ERF) bzw. Ferrofluid versorgt, in der der Systemdruck (z.B. Pumpendruck) gehalten wird.

Zwischen dem Druckraum 20 einer jeweiligen Stützquelle 16 und der gemeinsamen Versorgungsleitung 18 ist jeweils eine Verbindungsleitung 22 vorgesehen. In diese Verbindungsleitung 22 ist eine Drosselstelle 24 integriert, in der zur Erzeugung des Feldes ein elektrischer Leiter 26, eine Spule oder dergleichen angeordnet ist.

Zudem ist ein direkt mit dem Druckraum 20 der Stützquelle 16 verbundener Druckaufnehmer 28 vorgesehen.

Der zur Druckregelung vorgesehene elektrische Regler ist vorzugsweise außerhalb der Walze 10 angeordnet.

Im vorliegenden Fall wird also vorzugsweise jede Stützquelle 16 ausschließlich mit dem elektrorheologischen Fluid (ERF) bzw. Ferrofluid betrieben. Die Druckversorgung erfolgt über die gemeinsame Versorgungsleitung 18 für sämtliche Stützquellen oder Stützelemente 16, in der der Systemdruck (zum Beispiel Pumpendruck) gehalten wird. In der Verbindungsleitung 22 zum Druckraum 20 einer jeweiligen Stützquelle 16 ist die Drosselstelle 24 integriert, in der mittels des elektrischen Leiters 26, Spule oder dergleichen das betreffende Feld aufgebaut werden kann. Im vorliegenden Fall wird ein elektrisches Feld erzeugt bzw. eine Spannung angelegt, d.h. es wird hier die Viskosität eines elektrorheologischen Fluids (ERF) entsprechend beeinflusst. Wie erwähnt, kann jedoch beispielsweise auch ein Ferrofluid eingesetzt werden, dessen Viskosität dann über ein entsprechendes magnetisches Feld entsprechend beeinflussbar ist.

Zur Regelung des hydraulischen Drucks unter der Stützquelle 16 wird der Istdruck mit dem Druckaufnehmer 28 erfasst, der durch einen handelsüblichen Druckaufnehmer gebildet sein kann. Für die Druckregelung einer Stützquelle 16 sind somit im Innern der Biegeausgleichswalze 10 lediglich die Drosselstelle 24 beispielsweise mit isoliertem Spannungsanschluss, zwei Kabel und ein Druckaufnehmer 28 erforderlich.

Wie anhand der einzigen Figur zu erkennen ist, weist die hydrostatische Stützquelle 16 auf ihrer dem Walzenmantel 12 zugewandten Seite wenigstens eine Öltasche 30 auf, die über wenigstens eine erste Drosselstelle 32 mit dem Druckraum 20 der Stützquelle 16 in Verbindung steht. In der einzigen Figur sind zwei solche Öltaschen 30 zu erkennen.

Dabei ist eine jeweilige Öltasche 30 über wenigstens eine zur ersten Drosselstelle 32 parallele zweite Drosselstelle 34 mit dem Druckraum 20 verbunden. Der durch eine jeweilige zweite Drosselstelle 34 fließende zusätzliche Volumenstrom ist nun ebenfalls über ein die Viskosität des elektrorheologischen Fluids (ERF) bzw. Ferrofluids beeinflussendes Feld variierbar.

Dabei kann der durch die zweite Drosselstelle 34 fließende zusätzliche Volumenstrom über das betreffende Feld insbesondere in Abhängigkeit vom Druck im Druckraum 20 variierbar sein. Dabei ist der durch die zweite Drosselstelle 34 fließende zusätzliche Volumenstrom über das betreffende Feld insbesondere so steuer- und/oder regelbar, dass sich bei höheren Drücken im Druckraum 20 ein geringerer oder kein zusätzlicher Volumenstrom und bei geringeren Drücken im Druckraum 20 ein höherer zusätzlicher Volumenstrom ergibt.

Beim vorliegenden Ausführungsbeispiel wird wieder ein elektrisches Feld erzeugt bzw. eine Spannung angelegt, d. h. es wird auch hier wieder die Viskosität eines elektrorheologischen Fluids (ERF) entsprechend beeinflusst. In einer jeweiligen zweiten Drosselstelle 34 kann also beispielsweise jeweils wieder ein elektrischer Leiter 36 oder dergleichen vorgesehen sein, um das jeweilige elektrische Feld zu erzeugen.

Wie bereits erwähnt, kann jedoch beispielsweise auch ein Ferrofluid eingesetzt werden, dessen Viskosität dann über ein entsprechendes magnetisches Feld entsprechend beeinflussbar ist. In die zweiten Drosselstellen 34 ist dann jeweils eine Spule oder dergleichen einzusetzen, über die das betreffende magnetische Feld erzeugt wird.

Zur Unterdrückung unerwünschter Temperatureinflüsse können also Stützquellen, die von einem elektrorheologischen Fluid oder Ferrofluid durchströmt werden, besonders einfach umgestaltet bzw. weitergebildet werden. Neben den üblichen Kapillarbohrungen (erste Drosselstelle) ist für jede Öltasche wenigstens eine zweite Drosselstelle parallel geschaltet, durch die ein zusätzlich fließender Volumenstrom durch Aufschaltung eines elektrischen oder magnetischen Feldes vorzugsweise in Abhängigkeit vom anstehenden Kolbendruck gesteuert werden kann.

Bei hohen Kolbendrücken wird an den parallel geschalteten zweiten Drosselstellen zum Beispiel eine Spannung angelegt, die so hoch ist, dass kein oder nur eine geringe Menge elektrorheologischen Fluids durch die zweiten Drosselstellen fließt. In diesem Fall wird die Stützquelle wie eine herkömmliche Stützquelle betrieben.

Bei niedrigen Kolbendrücken wird eine geringere Spannung angelegt, so dass ein zusätzlicher Volumenstrom über die Stützquelle abfließt. Dies führt zu einer Erhöhung des Ölspaltes und damit zu einer Verringerung der Reibleistung.

Aufgrund der geringeren Reibung und des erhöhten Volumenstroms ergibt sich eine deutliche Reduzierung der sich einstellenden Öltemperatur im Rücklauf, wodurch die eingangs erwähnten negativen thermischen Effekte vermieden werden.

Die Parallelschaltung einer festen Drosselstelle und einer elektrisch oder magnetisch steuerbaren Drosselstelle bringt den Vorteil mit sich, dass bei eventuell auftretenden Fehlbeaufschlagungen der steuerbaren Drosselstelle es nicht zu einer Mischreibung zwischen den Stützquellen und dem rotierenden Walzenmantel kommen kann. Bei völlig verschlossenen, zum Beispiel elektrisch oder magnetisch steuerbaren zweiten Drosselstellen wird die Funktionsfähigkeit der Stützquellen unverändert erhalten.

### Bezugszeichenliste

- 10: Biegeausgleichswalze
- 12: Walzenmantel
- 14: Joch
- 16: Stützquelle
- 18: Versorgungsleitung
- 20: Druckraum
- 22: Verbindungsleitung
- 24: Drosselstelle
- 26: elektrischer Leiter
- 28: Druckaufnehmer
- 30: Öltasche
- 32: erste Drosselstelle
- 34: zweite Drosselstelle
- 36: Leiter

## Patentansprüche

1. Biegeausgleichswalze (10) mit einem umlaufenden Walzenmantel (12), einem den Walzenmantel (12) axial durchsetzenden drehfesten Joch (14) und wenigstens einer zwischen dem Joch (14) und dem Walzenmantel (12) angeordneten hydrostatischen Stützquelle (16), die auf ihrer dem Walzenmantel (12) zugewandten Seite wenigstens eine Öltasche (30) aufweist, die über wenigstens eine erste Drosselstelle (32) mit dem Druckraum (20) der Stützquelle (16) in Verbindung steht, wobei die Stützquelle (16) zumindest teilweise mit einem elektrorheologischen Fluid (ERF) und/oder Ferrofluid betrieben ist, dessen Viskosität über ein elektrisches bzw. magnetisches Feld variierbar ist, und wobei die Öltasche (30) über wenigstens eine zur ersten Drosselstelle (32) parallele zweite Drosselstelle (34) mit dem Druckraum (20) in Verbindung steht und der durch die zweite Drosselstelle (34) fließende zusätzliche Volumenstrom über ein die Viskosität des elektrorheologischen Fluids (ERF) bzw. Ferrofluids beeinflussendes Feld variierbar ist.

2. Biegeausgleichswalze nach Anspruch 1,
**dadurch gekennzeichnet,**
**dass** der durch die zweite Drosselstelle (34) fließende zusätzliche Volumenstrom über das betreffende Feld in Abhängigkeit vom Druck im Druckraum (20) variierbar ist.

3. Biegeausgleichswalze nach Anspruch 2,
**dadurch gekennzeichnet,**
**dass** der durch die zweite Drosselstelle (34) fließende zusätzliche Volumenstrom über das betreffende Feld so steuerbar und/oder regelbar ist, dass sich bei höheren Drücken im Druckraum (20) ein geringerer oder kein zusätzlicher Volumenstrom und bei geringeren Drücken im Druckraum (20) ein höherer zusätzlicher Volumenstrom ergibt.

4. Biegeausgleichswalze nach einem der vorhergehenden Ansprüche,
**dadurch gekennzeichnet,**
**dass** die Stützquelle (16) zumindest teilweise mit einem elektrorheologischen Fluid (ERF) betrieben und der durch die zweite Drosselstelle (34) fließende zusätzliche Volumenstrom über ein elektrisches Feld variierbar ist.

5. Biegeausgleichswalze nach Anspruch 4,
**dadurch gekennzeichnet,**
**dass** die zweite Drosselstelle (34) einen elektrischen Leiter oder ein Kabel umfasst.

6. Biegeausgleichswalze nach einem der vorhergehenden Ansprüche,
**dadurch gekennzeichnet,**
**dass** über ein die Viskosität des elektrorheologischen Fluids (ERF) bzw. Ferrofluids beeinflussendes Feld der hydraulische Druck bzw. Druck im Druckraum variierbar ist.

7. Biegeausgleichswalze nach Anspruch 6,
**dadurch gekennzeichnet,**
**dass** eine Druckregelung vorgesehen ist.

8. Biegeausgleichswalze nach einem der vorhergehenden Ansprüche,
**dadurch gekennzeichnet,**
**dass** über ein die Viskosität des elektrorheologischen Fluids (ERF) bzw. Ferrofluids beeinflussendes Feld der durch die erste Drosselstelle (32) fließende Volumenstrom variierbar ist.

9. Biegeausgleichswalze nach Anspruch 8,
**dadurch gekennzeichnet,**
**dass** eine Volumenstromregelung vorgesehen ist.

10. Biegeausgleichswalze nach einem der vorhergehenden Ansprüche,
**dadurch gekennzeichnet,**
**dass** die Stützquelle (16) ausschließlich mit dem elektrorheologischen Fluid (ERF) bzw. Ferrofluid betrieben ist.

11. Biegeausgleichswalze nach einem der vorhergehenden Ansprüche,
**dadurch gekennzeichnet,**
**dass** mehrere Stützquellen (16) über eine gemeinsame Versorgungslei-tung (18) mit dem Elektrorheologischen Fluid (ERF) bzw. Ferrofluid versorgt sind, in der der Systemdruck gehalten wird.

12. Biegeausgleichswalze nach Anspruch 11,
**dadurch gekennzeichnet,**
**dass** zwischen dem Druckraum (20) einer jeweiligen Stützquelle (16) und der gemeinsamen Versorgungsleitung (18) jeweils eine Verbindungsleitung (22) vorgesehen ist, in die eine Drosselstelle (24) integriert ist, in der zur Erzeugung des Feldes ein vorzugsweise elektrischer Leiter (26) oder ein Kabel angeordnet ist.

## Claims

1. Controlled deflection roll (10) having a revolving roll shell(12), a yoke (14) which is fixed against rotation and passes axially through the roll shell (12), and at least one hydrostatic source of support (16) which is arranged between the yoke (14) and the roll shell (12) and which, on its side facing the roll shell (12), has at least one oil pocket (30), which is connected to the pressure chamber (20) of the source of support (16) via at least one first throttling point (32), the source of support (16) being operated at least partly with an electrorheological fluid (ERF) and/or ferrofluid, whose viscosity can be varied via an electric or magnetic field, the oil pocket (30) being connected to the pressure chamber (20) via at least one second throttling point (34) parallel to the first throttling point (32) and it being possible for the additional volume flow flowing through the second throttling point (34) to be varied via a field influencing the viscosity of the electrorheological fluid (ERF) or ferrofluid.

2. Controlled deflection roll according to Claim 1, **characterized in that** the additional volume flow flowing through the second throttling point (34) can be varied via the relevant field as a function of the pressure in the pressure chamber (20).

3. Controlled deflection roll according to Claim 2, **characterized in that** the additional volume flow flowing through the second throttling point (34) can be controlled and/or regulated by the relevant field in such a way that, in the event of higher pressures in the pressure chamber (20), the result is a lower or no additional volume flow and, in the event of lower pressures in the pressure chamber (20), the result is a higher additional volume flow.

4. Controlled deflection roll according to one of the preceding claims, **characterized in that** the source of support (16) is operated at least partly with an electrorheological fluid (ERF), and the additional volume flow flowing through the second throttling point (34) can be varied via an electric field.

5. Controlled deflection roll according to Claim 4, **characterized in that** the second throttling point (34) comprises an electric lead or a cable.

6. Controlled deflection roll according to one of the preceding claims, **characterized in that** the hydraulic pressure or pressure in the pressure chamber can be varied via a field influencing the viscosity of the electrorheological fluid (ERF) or ferrofluid.

7. Controlled deflection roll according to Claim 6, **characterized in that** a pressure regulator is provided.

8. Controlled deflection roll according to one of the preceding claims, **characterized in that** the volume flow flowing through the first throttling point (32) can be varied via a field influencing the viscosity of the electrorheological fluid (ERF) or ferrofluid.

9. Controlled deflection roll according to Claim 8, **characterized in that** a volume flow regulator is provided.

10. Controlled deflection roll according to one of the preceding claims, **characterized in that** the source of support (16) is operated exclusively with the electrorheological fluid (ERF) or ferrofluid.

11. Controlled deflection roll according to one of the preceding claims, **characterized in that** a plurality of sources of support (16) are supplied with the electrorheological fluid (ERF) or ferrofluid via a common supply line (18), in which the system pressure is maintained.

12. Controlled deflection roll according to Claim 11, **characterized in that**, between the pressure chamber (20) of a respective source of support (16) and the common supply line (18), in each case a connecting line (22) is provided, into which there is integrated a throttling point (24) in which a preferably electric lead (26) or a cable for producing the field is arranged.

## Revendications

1. Rouleau de compensation de flexion (10), comprenant une enveloppe de rouleau périphérique (12), une culasse (14) fixe en rotation, traversant axialement l'enveloppe de rouleau (12), et au moins une source de support hydrostatique (16) disposée entre la culasse (14) et l'enveloppe de rouleau (12), qui présente sur son côté tourné vers l'enveloppe de rouleau (12) au moins une poche d'huile (30), qui est en liaison avec l'espace de pression (20) de la source de support (16) par le biais d'au moins un premier point d'étranglement (32), la source de support (16) étant entraînée au moins en partie par un fluide électro-rhéologique (ERF) et/ou par un ferrofluide, dont la viscosité peut être modifiée par le biais d'un champ électrique ou magnétique, la poche d'huile (30) étant en liaison avec l'espace de pression (20) par le biais d'au moins un deuxième point d'étranglement (34) parallèle au premier point d'étranglement (32), et le débit volumique supplémentaire s'écoulant à travers le deuxième point d'étranglement (34) pouvant être modifié par le biais d'un champ influençant la viscosité du fluide électro-rhéologique (ERF) ou du ferrofluide.

2. Rouleau de compensation de flexion selon la revendication 1,
**caractérisé en ce que**
le débit volumique supplémentaire s'écoulant à travers le deuxième point d'étranglement (34) peut être modifié par le biais du champ concerné en fonction de la pression dans l'espace de pression (20).

3. Rouleau de compensation de flexion selon la revendication 2,
**caractérisé en ce que**
le débit volumique supplémentaire s'écoulant à travers le deuxième point d'étranglement (34) peut être commandé et/ou régulé par le biais du champ concerné, de telle sorte qu'à des pressions plus élevées dans l'espace de pression (20), un plus petit débit volumique supplémentaire, ou aucun débit volumique supplémentaire, ne soit obtenu, et qu'à des pressions plus faibles dans l'espace de pression (20), un débit volumique supplémentaire plus élevé soit obtenu.

4. Rouleau de compensation de flexion selon l'une quelconque des revendications précédentes,
**caractérisé en ce que**
la source de support (16) fonctionne au moins en partie avec un fluide électro-rhéologique (ERF) et le débit volumique supplémentaire s'écoulant à travers le deuxième point d'étranglement (34) peut être modifié par le biais d'un champ électrique.

5. Rouleau de compensation de flexion selon la revendication 4,
**caractérisé en ce que**
le deuxième point d'étranglement (34) comprend un conducteur électrique ou un câble électrique.

6. Rouleau de compensation de flexion selon l'une quelconque des revendications précédentes,
**caractérisé en ce que**
la pression hydraulique ou la pression dans l'espace de pression peut être modifiée par le biais d'un champ influençant la viscosité du fluide électro-rhéologique (ERF) ou du ferrofluide.

7. Rouleau de compensation de flexion selon la revendication 6,
**caractérisé en ce que**
l'on prévoit une régulation de la pression.

8. Rouleau de compensation de flexion selon l'une quelconque des revendications précédentes,
**caractérisé en ce que**
le débit volumique s'écoulant à travers le premier point d'étranglement (32) peut être modifié par le biais d'un champ influençant la viscosité du fluide électro-rhéologique (ERF) ou du ferrofluide.

9. Rouleau de compensation de flexion selon la revendication 8,
**caractérisé en ce que**
l'on prévoit une régulation du débit volumique.

10. Rouleau de compensation de flexion selon l'une quelconque des revendications précédentes,
**caractérisé en ce que**
la source de support (16) est entraînée exclusivement par le fluide électro-rhéologique (ERF) ou le ferrofluide.

11. Rouleau de compensation de flexion selon l'une quelconque des revendications précédentes,
**caractérisé en ce que**
plusieurs sources de support (16) sont alimentées par le biais d'une conduite d'alimentation commune (18) en fluide électro-rhéologique (ERF) ou en ferrofluide, la pression du système étant maintenue dans ladite conduite.

12. Rouleau de compensation de flexion selon la revendication 11,
**caractérisé en ce que**
l'on prévoit entre l'espace de pression (20) d'une source de support respective (16) et la conduite d'alimentation commune (18), à chaque fois une conduite de connexion (22), dans laquelle est intégré un point d'étranglement (24) dans lequel est disposé un conducteur de préférence électrique (26) ou un câble, pour produire ledit champ.
